# EUROPÄISCHE PATENTSCHRIFT

(11) **EP 1 627 768 B1**
(45) Veröffentlichungstag und Bekanntmachung des Hinweises auf die Patenterteilung: **18.05.2011**
(21) Anmeldenummer: 05025304.6
(22) Anmeldetag: 01.09.2001
(51) Int. Cl.: B60N 2/30, B60N 2/36

(54) **Klappbarer Sitz, insbesondere für ein Kraftfahrzeug**
Collapsible seat particularly for automotive vehicles
Siège pliable en particulier pour véhicules automobiles

(30) Priorität: 27.09.2000 DE 10047742
(43) Veröffentlichungstag der Anmeldung: 22.02.2006
(62) Teilanmeldung aus: 01121035.8
(73) Patentinhaber: Bayerische Motoren Werke Aktiengesellschaft, 80809 München (DE)
(72) Erfinder: Glaesser, Jürgen, 85386 Dietersheim (DE); Zeidler, Matthias, 85221 Dachau (DE); Weber, Johann, 85229 Markt Indersdorf (DE); Palmer, Mark, New Arley Warwickshire CV7 8PR (GB)

(56) Entgegenhaltungen:
- WO-A-98/54024
- US-A- 5 570 931
- US-A- 6 113 191

## Beschreibung

Die Erfindung betrifft ein Kraftfahrzeug mit einem klappbaren Sitz gemäß dem Oberbegriff des Anspruchs 1.

Aus der WO 98/54024 A ist ein Kraftfahrzeug mit einem freistehenden und klappbaren Sitz bekannt, das alle Merkmale des Oberbegriffs des Anspruchs 1 zeigt. "Freistehend" heißt, dass keine Zusatzstreben zwischen dem Sitz und der Karosserie für die erforderliche Stabilität vorhanden sind. Der bekannte Sitz weist eine Rückenlehne und ein Sitzteil auf, wobei an der Rückenlehne gegebenenfalls eine Kopfstütze angeordnet sein kann. Ferner ist eine Kinematik vorgesehen, durch die sich der Sitz mindestens von einer Position S mit einer Sitzfunktion in eine Position L mit einer Ladeflächenfunktion und zurück verstellen lässt. Der Sitz ist in den Positionen S mit der Sitzfunktion und L mit der Ladeflächenfunktion verriegelbar. In der Position L mit der Ladeflächenposition dient eine Rückseite der Rückenlehne als Ladefläche.

Ein unteres Ende der Rückenlehne des Sitzes ist über eine Drehachse verschwenkbar an jeweils einem Lehnenträger angeordnet. Die beiden um die Sitzbreite voneinander beabstandeten Lehnenträger sind jeweils seitlich am Sitz in Höhe der Rückenlehne angeordnet. Zwischen dem unteren Ende der Rückenlehne des Sitzes und dem jeweiligen Lehnenträger ist in bekannter Weise jeweils ein Sitzbeschlag zur Übertragung der bei einem Sitz auftretenden Kräfte vorgesehen.

Ein hinteres Ende des Sitzteiles ist über eine Drehachse an dem unteren Ende der Rückenlehne angeordnet. Ein vorderer Bereich des Sitzteiles ist über mindestens einen verschwenkbaren, vorderen Hebel aus der Position S mit der Sitzfunktion in die Position L mit der Ladeflächenfunktion und zurück verstellbar.

Der verschwenkbare, vordere Hebel ist verschiebbar über Sitzschienen an der Karosserie des Fahrzeuges oder dergleichen angelenkt Auch der jeweilige Lehnenträger, an dem das untere Ende der Rückenlehne des Sitzes angelenkt ist, ist verschiebbar in Sitzschienen geführt. Damit ist sowohl das Sitzteil als auch die Rückenlehne verschiebbar über Sitzschienen mit der Karosserie verbunden.

Durch eine Längsverschiebung des gesamten Sitzes über die in der jeweiligen Sitzschiene angeordneten unteren Enden der beiden vorderen Hebel und der beiden unteren Enden der Lehnenträger sowie einer gleichzeitigen Verschwenkung der Rückenlehne nach vorne, wird erreicht, dass der hinter dem Sitz befindliche Raum vergrößert und dadurch leichter zugänglich ist.

Allerdings verändert sich dadurch auch die vom Fahrzeug-Benutzer eingestellte Sitzposition des Sitzes für den Fahrbetrieb. Diese Sitzposition des Sitzes für den Fahrbetrieb wird in der Regel vom Fahrzeug-Benutzer in Bezug auf seine körperlichen Gegebenheiten wie Beinlänge, Armlänge, Oberkörperlänge am Anfang der Fahrzeugbenutzung einmal in einem zeitaufwändigen Einstellvorgang eingestellt und wird in der Regel vom Fahrzeug-Benutzer auch nicht mehr verändert.

Aus der US-A-6 113191 ist bereits ein klappbarer Sitz bekannt, der in einem Kraftfahrzeug einsetzbar ist. Der Sitz weist eine Rückenlehne und ein Sitzteil auf. Ferner ist eine Kinematik vorgesehen, durch die sich der Sitz mindestens von einer Position S mit einer Sitzfunktion in eine Position L mit einer Ladeflächenfunktion und zurück verstellen lässt. Der bekannte Sitz ist in den Positionen S und L verriegelbar. In der Position L mit der Ladeflächenfunktion dient eine Rückseite der Rückenlehne als Ladefläche.

Ein unteres Ende der Rückenlehne des Sitzes ist über eine Drehachse verschwenkbar. Ferner ist ein hinteres Ende des Sitzteiles über eine Drehachse an dem unteren Ende der Rückenlehne angeordnet. Ein vorderer Bereich des Sitzteiles ist über mindestens einen verschwenkbaren Hebel ortsfest an der Karosserie des Fahrzeuges oder dergleichen angelenkt ist. Der vordere Bereich des Sitzteiles ist über den jeweiligen verschwenkbaren Hebel in einer Schwenkbewegung aus der Position S mit der Sitzfunktion in die Position L mit der Ladeflächenfunktion und zurück verstellbar.

Die Rückenlehne des bekannten Sitzes ist über eine Verbindungsstrebe gelenkig mit einem vorderen Rand eines erhöhten hinteren Karosserieabschnittes unter Bildung einer Schwenkachse verbunden. Diese Schwenkachse liegt in der Höhe etwas unterhalb der Drehachse des hinteren Endes des Sitzteiles und oberhalb der Drehachse des unteren Endes der Rückenlehne.

Das untere Ende der Rückenlehne ist verschiebbar in einer Kulissenführung mit der Karosserie verbunden. Der Sitz ist in eine vordere Position verschiebbar, so dass der hinter dem Sitz befindliche Raum zugänglich ist.

Durch die Verbindungsstrebe wird der Einstieg in den hinter dem Sitz befindlichen Raum Fußraum versperrt. Zusätzlich verringert das nach hinten verschobene untere Ende der Rückenlehne in Fahrzeuglängsrichtung und in Fahrzeugquerrichtung den Freiraum, so dass ein Einstieg in den hinter dem bekannten Sitz befindlichen Fußraum oder Freiraum verhindert wird.

Die Verbindungsstrebe ist erforderlich, um zusätzliche Kräfte aufzunehmen, die beispielsweise bei einem Crash von vorne auf die zum Anlehnen dienende Oberfläche der Rückenlehne wirken oder von Kräften, die auf eine Rückseite der Rückenlehne wirken, wenn beispielsweise Ladegut bei einem starken Abbremsen oder einem Unfall auf die Rückseite der Rückenlehne auftritt.

Aufgabe der Erfindung ist es, ein Kraftfahrzeug mit einem klappbaren Sitz, zu schaffen, der einen einfachen Aufbau aufweist.

Diese Aufgabe wird durch die Merkmale des Anspruchs 1 gelöst.

Das erfindungsgemäße Kraftfahrzeug weist einen vorteilhaften Aufbau auf, der im Prinzip darin besteht, dass die Rückenlehne des Sitzes über eine Schwenk- oder Drehachse fest mit einer Fahrzeugkarosserie oder den Rückenlehnenträgern verbunden ist, die sich an beiden Seiten des Sitzteiles befinden. Das Sitzteil oder Sitzkissen ist wiederum an seinem hinteren Ende drehbar mit einem unteren Ende der Rückenlehne verbunden. Die Rückenlehnenlager für die Rückenlehne sind nicht karosseriefest montiert, sondern befinden sich auf jeweils einer Sitzschiene. Bei diesem Aufbau kann die Kinematik der am vorderen Ende des Sitzteils angelenkten Hebel so ausgelegt werden, dass die Anbindung an einem vorderen Ende des Sitzteils weiterhin karosseriefest bleibt. Ein vorderes Ende des Sitzteiles ist über mindestens einen drehbar gelagerten Hebel verschiebbar und/oder verschwenkbar mit der Karosserie verbunden. Über die Hebellängen kann die Kinematik des Sitzteiles so ausgelegt werden, dass sich die Hebel in ihrer Endlage, in der die Rückenlehne nach vorne geklappt ist, in der Strecklage befinden und es dadurch zu einer Verriegelung des Sitzes über einen Kniehebeleffekt kommt. Aufgrund dieser erfindungsgemäßen Kinematik ergibt sich beim Klappen der Rückenlehne nach vorne, nach einer entsprechenden Entriegelung der Rückenlehne, eine sehr kompakte Faltung, wodurch eine günstige Verstauung des Sitzes, beispielsweise im Fahrzeug, ermöglicht wird.

In einer vorteilhaften Ausführungsform ist die Kinematik so ausgelegt, dass die am vorderen Ende des Sitzteils angelenkten Hebel in einer mittleren Sitzhöhe des Sitzteiles rechtwinklig zur Sitzschiene positioniert sind. Bei dieser Kinematik senkt sich das Sitzteil, wenn die Rückenlehne nach vorne geschoben wird. In dieser Position haben vorteilhafterweise kleinere Personen und Kinder die Möglichkeit, die Füße im Fußraum bequem abzustellen. Im anderen Fall, wenn die Rückenlehne über die Sitzschiene nach hinten verfahren wird, senkt sich das Sitzteil wieder. In dieser Sitzposition können die Beine der auf dem Sitz befindlichen Person bequem ausgestreckt werden.

Neben der vorhergehenden Ausführungsform, in der die Hebel am vorderen Ende des Sitzteiles über den Nullpunkt nach vorne und nach hinten verschwenkbar sind, gibt es weitere, vorteilhafte Ausführungsformen, bei denen die Hebel am vorderen Ende des Sitzteils aus einer vorderen, unteren Position maximal bis in eine mittlere Position oder Nullposition oder aus einer hinteren, unteren Position maximal bis in die mittlere Position verschwenkbar sind.

Ist in einer vorteilhaften Ausführungsform der Hebel in seiner mittleren Position schräg nach hinten geneigt, so hebt sich das Sitzteil bis in die vorderste anfahrbare Position im Sitzverstellfeld an. Da das hintere Ende des Sitzteils fest am Lehnenträger angelenkt ist und somit bei einer gleichbleibenden Rückenlehnenneigung nicht höhenverstellt wird, wird das vordere Ende des Sitzteils angehoben, wenn der Sitz in eine weiter vorne liegende Position verschoben wird. Dadurch wird die Lage des Sitzteiles in vorteilhafter Weise dem steileren Oberschenkelwinkel der auf dem Sitz befindlichen Person anpaßt. Wird in dieser Ausführungsform der Sitz bzw. die Rückenlehne in eine hintere Position verschoben, so wird der Winkel des Sitzteils wieder flacher, wie dies vorteilhafterweise bei einem ausgestreckten Oberschenkel der Fall ist.

Die Rückenlehne ist in einer vorteilhaften Ausführungsform in ihrer Neigung verstellbar ausgelegt.

Die Kinematik ist vorteilhaftweise so ausgelegt, dass bei einer Verschwenkung der Rückenlehne nach hinten das Sitzkissen flacher wird. Wird der Sitz nach vorne verfahren und die Rückenlehne in eine senkrechtere Position verschwenkt, so nimmt das vordere Ende des Sitzteils eine höhere Lage ein, während das hintere Ende des Sitzteils durch das Aufrichten der Rückenlehne nach unten gesenkt ist. Dadurch ergibt sich eine körpergerechte Sitzeinstellung.

In einer vorteilhaften Ausführungsform wird durch das Verschieben und Verschwenken der Rückenlehne nach vorne eine günstige Faltung erreicht, die relativ viel Platz zum Einstieg in eine hinter dem Sitz befindliche Sitzreihe oder einen Sitz oder einen Gepäckraum freigibt.

Der Sitz kann vorteilhafterweise aus der Einstiegsposition in eine Ladeposition verschwenkt werden. Hierzu wird manuell oder automatisch die Rückenlehne vom Sitzteil entriegelt. Die Rückenlehne wird nach vorne verschwenkt und gleichzeitig auf Grund des Kniehebeleffekts nach hinten geschoben. Der am vorderen Ende des Sitzteils jeweils angelenkte Hebel wird aus einer schrägen Lage in eine in etwa waagrechte Lage verfahren.

Ausführungsformen der Erfindung werden nachstehend anhand der Zeichnungen beispielshalber beschrieben. Dabei zeigen:
- Fig. 1: eine Seitenansicht einer ersten, nicht erfindungsgemäßen, Ausführungsform eines Sitzes in der Sitzposition,
- Fig. 2: eine Zwischenstellung des in der Fig. 1 gezeigten Sitzes beim Zusammenklappen,
- Fig. 3: eine Seitenansicht des in den Fig. 1 und 2 gezeigten Sitzes im zusammengeklappten Zustand, bei der die Rückseite der Rückenlehne als Ladefläche oder Gepäckraumboden dient,
- Fig. 4: eine Seitenansicht einer zweiten Ausführungsform eines Sitzes in der Sitzposition,
- Fig. 5: eine Seitenansicht des in der Fig. 4 gezeigten Sitzes beim Zusammenklappen durch ein Verschwenken der Rückenlehne,
- Fig. 6: den in den Fig. 4 und 5 gezeigten Sitz im zusammengeklappten Zustand, bei dem die Rückseite der Rückenlehne als Gepäckraumboden dient,
- Fig. 7: eine Seitenansicht einer dritten Ausführungsform eines Sitzes in einer Sitzposition,
- Fig. 8: eine Seitenansicht des in der Fig. 7 gezeigten Sitzes in einer Zwischenstellung beim Zusammenklappen des Sitzes,
- Fig. 9: eine Seitenansicht des in den Fig. 7 und 8 gezeigten Sitzes im zusammengeklappten Zustand,
- Fig. 10 bis 12: jeweils eine Seitenansicht des in den Fig. 7 bis 9 gezeigten Sitzes, wobei sich ein Sitzteil des Sitzes in einer vorderen oder einer mittleren oder einer hinteren Position befindet, wobei die Lage der Rückenlehne in den Fig. 10 bis 12 unverändert bleibt und die Hebel an dem vorderen Ende des Sitzteiles aus einer schräg nach vorne geneigten Stellung in eine senkrechte Position und dann in eine schräg nach hinten geneigte Lage verstellt sind,
- Fig. 13 bis 15: Seitenansichten der dritten Ausführungsform des Sitzes, bei dem die Rückenlehne sich in einer vorderen oder in einer mittleren oder in einer hinteren Position befindet und die Hebel am vorderen Ende des Sitzteiles schräg nach hinten geneigt sind,
- Fig. 16: eine Seitenansicht der dritten Ausführungsform, bei der die Rückenlehne zur Erleichterung des Einstiegs zu einer hinteren Sitzreihe oder einem Gepäckraum schräg nach vorne geklappt und nach vorne verschoben ist und
- Fig. 17: eine Zwischenposition beim Zusammenklappen der dritten Ausführungsform des Sitzes, wenn die Rückenlehne nach vorne geklappt und nach hinten verschoben wird.

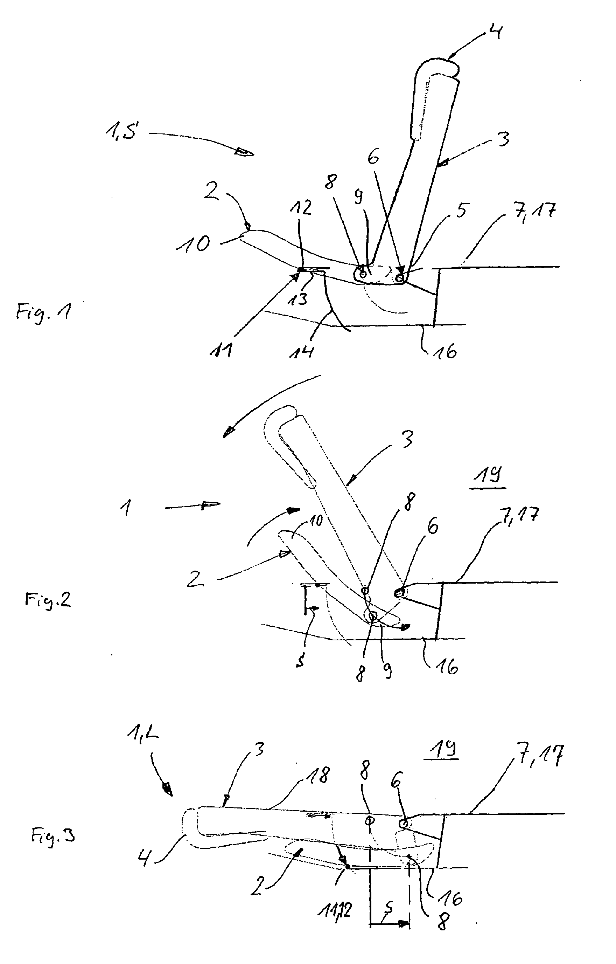

Die Fig. 1 zeigt eine erste, nicht erfindungsgemäße, Ausführungsform eines Sitzes 1, der im wesentlichen aus einem Sitzteil oder Sitzkissen 2 und einer Rückenlehne 3 besteht, bei der eine Kopfstütze 4 angeordnet oder integriert sein kann. Die Rückenlehne 3 weist an ihrem unteren Ende 5 eine Dreh- oder Schwenkachse 6 auf. Die Drehachse 6 ist, im Anwendungsfall bei einem Fahrzeug, an einer Karosserie 7 angeordnet. Beabstandet zu der Drehachse 6 für die Rückenlehne 3 ist eine weitere Dreh- oder Schwenkachse 8 ausgebildet, an der ein gestrichelt dargestelltes hinteres Ende 9 des Sitzteils 2 angelenkt ist. Zwischen einem vorderen Ende 10 des Sitzteiles 2 und dem hinteren Ende 9 ist das Sitzteil 2 in einer Kulissenführung 11 geführt.

In der gezeigten Ausführungsform besteht die Kulissenführung 11 aus jeweils einem Zapfen oder Bolzen 12, der jeweils seitlich über das Sitzteil 2 hinausragt. Die Kulissenführung 11 weist einen ersten in etwa waagrechten Abschnitt 13 und einen zweiten schräg nach unten und nach hinten verlaufenden Abschnitt 14 auf, durch den der jeweilige Zapfen 12 geführt ist. In der gezeigten Ausführungsform besteht der erste Abschnitt 13 aus einer Nut oder Vertiefung, die beispielsweise in einer Seitenwand oder einem Schweller eines Kraftfahrzeuges 17 ausgebildet ist.

In der Fig. 2 wird die Rückenlehne 3 um die Drehachse 6 nach vorne geschwenkt. Dadurch bewegt sich die Drehachse 8, an der das hintere Ende 9 des Sitzteils 2 angeordnet ist, nach unten. Aufgrund der Kulissenführung 11 wird das vordere Ende 10 des Sitzteiles 2 nach oben geschwenkt und um eine Strecke s nach hinten verschoben.

Befindet sich die Rückenlehne 3 in der in der Fig. 3 gezeigten waagrechten Stellung L, dann wurde das Sitzteil 2 über die Drehbewegung der Rückenlehne 3 auf einen Boden 16 des nicht dargestellten Fahrzeuges 17 gezogen. In dieser Stellung L befindet sich das Sitzteil 2 ebenfalls wieder in einer in etwa waagrechten Stellung, wie in der Fig. 1. Im zusammengeklappten Zustand des Sitzes 1 dient eine Rückseite 18 der Rückenlehne 3 als verlängerte Ladefläche eines Gepäckraumes 19.

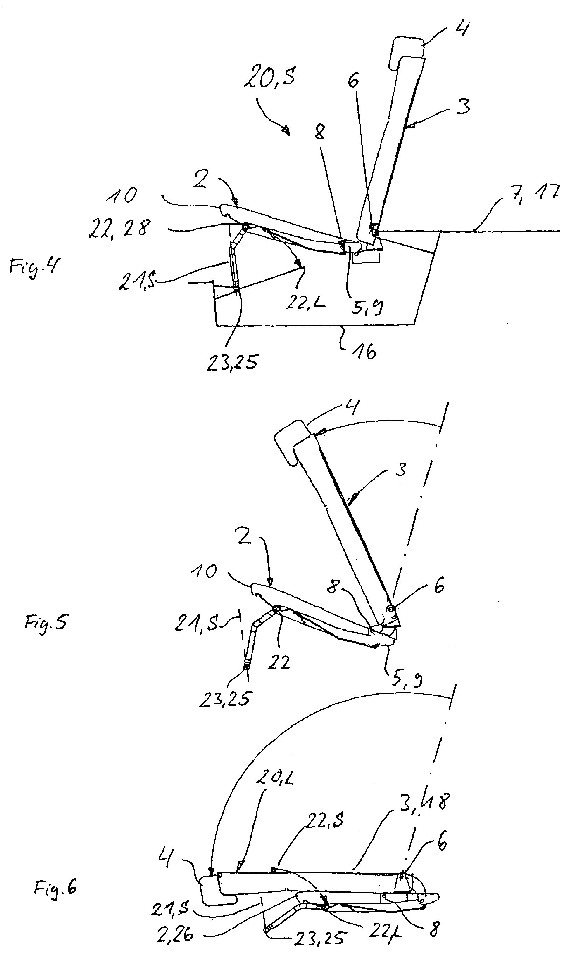

Die Fig. 4, 5 und 6 zeigen eine zweite Ausführungsform eines Sitzes 20. Bei dieser Ausführungsform sind gleiche Bauteile mit gleichen Bezugszeichen wie in den Fig. 1 bis 3 versehen. Der wesentliche Unterschied zu der in den Fig. 1 bis 3 gezeigten ersten Ausführungsform des Sitzes 1 besteht darin, dass beim Sitz 20 statt einer Kulissenführung 11 mindestens ein Hebel 21 zwischen dem vorderen Ende 10 und dem hinteren Ende 9 des Sitzteiles 2 vorgesehen ist. Ein oberes Ende 22 des Hebels 21 ist an einer Sitzteil-Unterseite 27 über ein oberes Gelenk 28 und ein unteres Ende 23 des Hebels 21 ist über ein unteres Gelenk 25 verschwenkbar an der Karosserie 7 bzw. an einem Boden 16 des Fahrzeuges 17 angelenkt. In der Fig. 4 befindet sich die Rückenlehne 3 und das Sitzteil 2 in einer Position S, in der eine Person auf dem Sitz 20 sitzen kann.

In der Fig. 5 wird die Rückenlehne 3 aus der in der Fig. 4 gezeigten Sitzposition S nach vorne um die Drehachse 6 geschwenkt. Durch die Verbindung der Rückenlehne 3 an ihrem unteren Ende 5 mit dem hinteren Ende 9 des Sitzteiles 2 wird das Sitzteil 2 aus der Sitzposition in der Fig. 4 über die Drehachse 8 in einer Kreisbewegung nach unten geschwenkt. Gleichzeitig bewegt sich der Hebel 21 aus der in der Fig. 4 in gestrichelten Linien gezeigten Position S in einer Kreisbewegung um das untere Lager oder Gelenk 25 nach hinten.

In der Fig. 6 befindet sich die Rückenlehne 3 in der waagrechten Stellung L, in der die Rückenlehne 3 die Funktion einer Ladefläche hat. Das Sitzteil 2 weist ebenfalls eine waagrechte Stellung 26 auf. Wie aus der Fig. 6 hervorgeht, wurde das obere Ende 22 des Hebels 21 auf einer Kreisbewegung nach unten verschwenkt.

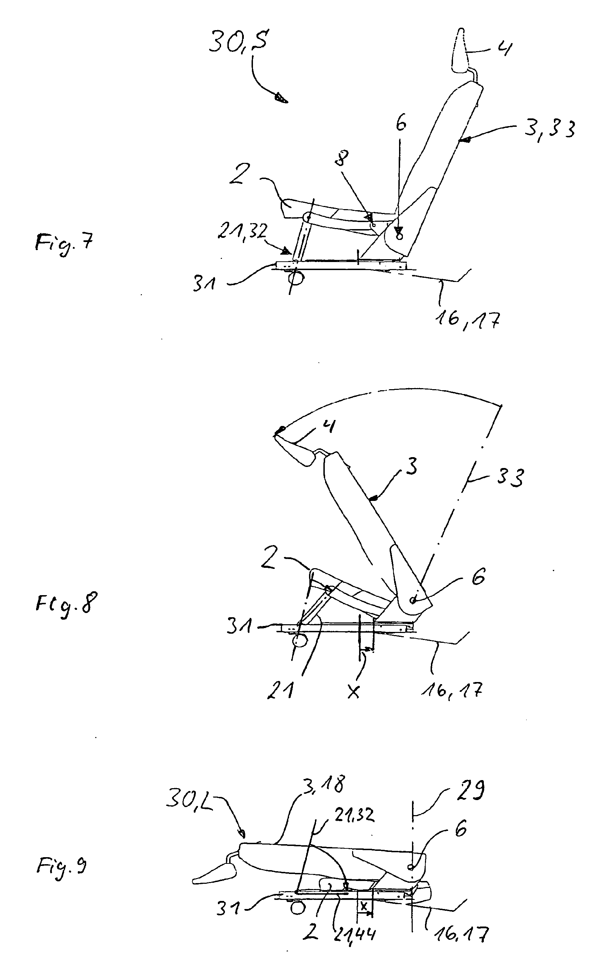

Die Fig. 7 bis 17 zeigen eine dritte Ausführungsform eines Sitzes 30. Im Unterschied zu der in den Fig. 4 bis 6 gezeigten zweiten Ausführungsform ist die Drehachse 6 nicht fest an der Karosserie 7 befestigt, sondern verschiebbar in einer am Boden 16 des Fahrzeuges 17 befestigten Sitzschiene 31.

In den Fig. 7 bis 9 sind die Stellungen des Sitzes 30 entsprechend den Fig. 1 bis 3 bzw. 4 bis 6 für den Sitz 1 bzw. den Sitz 20 gezeigt. In der Fig. 7 befindet sich der Sitz 30 in der Sitzposition S. Gleiche Teile sind mit gleichen Bezugszeichen wie in den vorhergehenden Fig. beschrieben. In der Fig. 7 befindet sich die Rückenlehne 3 in einer nach hinten geneigten, schrägen Stellung 33, während das Sitzteil 2 eine in etwa waagrechte Position aufweist. Der Hebel 21 befindet sich in einer schräg nach hinten geneigten Lage 32, die in etwa mit der Neigung der Rückenlehne 3 übereinstimmt.

Die Fig. 8 zeigt das Schwenken der Rückenlehne 3 nach vorne. Durch die Kinematik wird das Sitzteil 2 nach unten und nach hinten über den Hebel 21 geschwenkt. Gleichzeitig verschiebt sich die Rückenlehne 3 um eine Strecke x nach hinten.

In der Fig. 9 befindet sich die Rückenlehne 3 in der waagrechten Stellung L, in der die Rückseite 18 der Rückenlehne 3 als Ladefläche dient. Das Sitzteil 2 befindet sich ebenfalls in einer waagrechten Lage. In der Fig. 9 ist die Rückenlehne 3 auf der Sitzschiene 31 in der hintersten Position 29 verriegelt

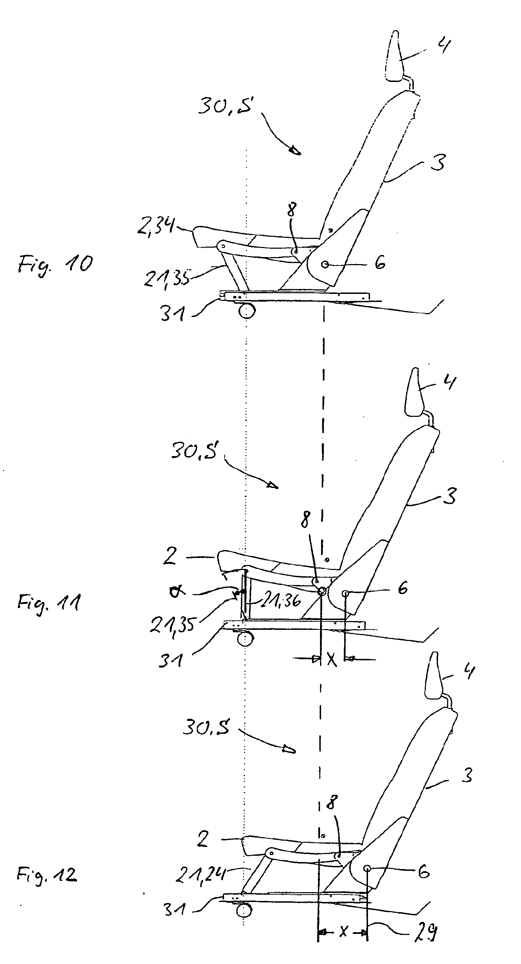

In der Fig. 10 befindet sich das Sitzteil 2 im Unterschied zu der Fig. 7 in einer vorderen Position 34. Entsprechend ist der Hebel 21 in eine vordere Position 35 verschwenkt. Die Schräge der Rückenlehne 3 bleibt in den Fig. 10 bis 12 unverändert. In der Fig. 11 ist der Hebel 21 um einen Winkel α nach hinten in seine mittlere Position 36 verschwenkt worden. Dabei ist gleichzeitig die Rückenlehne 3 um eine Strecke x nach hinten auf der Sitzschiene 31 in die Position 29 verschoben worden. In der Fig. 12 befindet sich der Hebel 21 in einer hinteren Stellung 24.

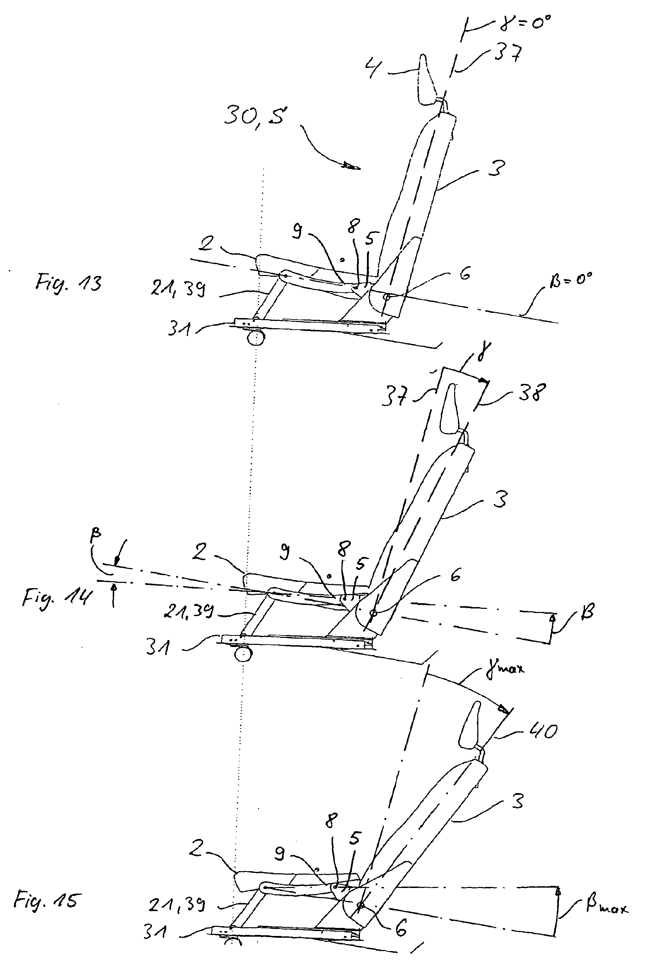

Die Fig. 13, 14 und 15 zeigen den Bewegungsablauf des Sitzteiles 2, wenn die Rückenlehne 3 aus der in der Fig. 13 gezeigten vorderen Position 37 nach hinten in eine mittlere Position 38 verschwenkt wird. Aufgrund der Anbindung des hinteren Endes 9 des Sitzteiles 2 über die Drehachse 8 mit dem unteren Ende 5 der Rückenlehne 3 erfolgt bei dieser Verschwenkung der Rückenlehne 3 nach hinten ein Anheben des hinteren Endes 9 des Sitzteiles 2 um einen Winkel β. Der Hebel 21 behält dabei in etwa seine in der Fig. 13 gezeigten Position 39 bei.

Die Fig. 15 zeigt eine Position 40 der Rückenlehne 3, bei der die Rückenlehne 3 in der gezeigten Ausführungsform maximal um einen Winkel γₘₐₓ nach hinten verschwenkt ist. Entsprechend ist auch das hintere Ende 9 maximal um einen Winkel βₘₐₓ nach oben verstellt worden.

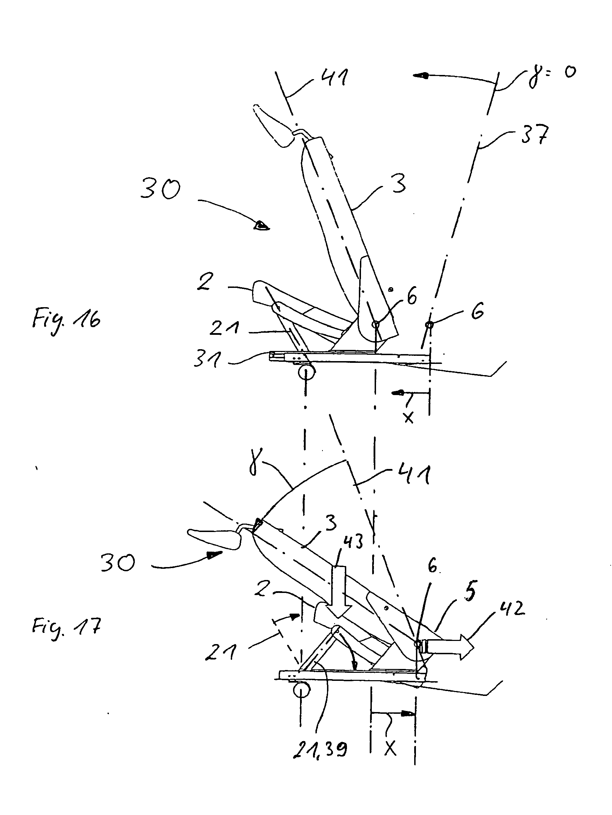

Die Fig. 16 zeigt den Sitz 30 in einer Position 41, bei der die Rückenlehne 3 auf der Sitzschiene 31 nach vorne geschoben und gleichzeitig nach vorne um die Drehachse 6 geschwenkt wurde. In dieser Position 41 ist eine hinter dem Sitz 30 befindliche Sitzreihe oder ein Gepäckraum leicht zugänglich.

Die Fig. 17 zeigt einen sogenannten Kniehebeleffekt, der den Sitz 30 automatisch, bei entriegelter Längsverstellung in seine hinterste Position verschiebt. Durch einen waagrechten Pfeil 42 ist der Verschiebeweg x des unteren Endes 5 der Rückenlehne 3 nach hinten angedeutet. Durch einen senkrechten Pfeil 43 ist gezeigt, dass der Hebel 21 aus seiner hinteren Position 39 nach unten in eine in der Fig. 9 gezeigten, in etwa waagrechten Position 44 schwenkt.

## Patentansprüche

1. Kraftfahrzeug mit klappbarem Sitz mit einer Rückenlehne (3), einer gegebenenfalls daran angeordneten Kopfstütze (4), mit einem Sitzteil (2), mit einer Kinematik, durch die sich der Sitz (30) mindestens von einer Position S mit einer Sitzfunktion in eine Position L mit einer Ladeflächenfunktion und zurück verstellen lässt, wobei der Sitz (30) in den Positionen S und L verriegelbar ist, wobei in der Position L mit der Ladeflächenfunktion eine Rückseite (18) der Rückenlehne (3) als Ladefläche dient, wobei ein unteres Ende (5) der Rückenlehne (3) des Sitzes (30) über eine Drehachse (6) verschwenkbar ist, wobei ein hinteres Ende (9) des Sitzteiles (2) über eine Drehachse (8) an dem unteren Ende (5) der Rückenlehne (3) angeordnet ist, wobei ein vorderer Bereich (10) des Sitzteiles (2) über mindestens einen verschwenkbaren Hebel (21), der beweglich an der Karosserie (7, 16) des Fahrzeuges oder dergleichen (17) angelenkt ist, aus der Position S mit der Sitzfunktion in die Position L mit der Ladeflächenfunktion und zurück verstellbar ist, wobei die Rückenlehne (3) verschiebbar über Sitzschienen (31) mit der Karosserie (7, 16) verbunden ist, wobei der Sitz (30) in eine vordere Position (41) verschiebbar ist, so dass der hinter dem Sitz (30) befindliche Raum zugänglich ist,
**dadurch gekennzeichnet, dass** das jeweilige untere Ende (23) des mindestens einen vorderen, verschwenkbaren Hebels (21) um ein unteres Gelenk (25) verschwenkbar an der Karosserie (7) bzw. an einem Boden (16) des Fahrzeuges (17) angelenkt ist.

2. Kraftfahrzeug nach Anspruch 1,
**dadurch gekennzeichnet, dass** der Sitz (30) mit der verschiebbaren Rückenlehne (3) beim Zusammenklappen in die Position mit der Ladeflächenfunktion L einen Kniehebeleffekt aufweist, der den Sitz (30) automatisch bei entriegelter Längsverstellung in die hinterste Position (29) des Sitzes (30) verschiebt.

## Claims

1. A motor vehicle with a foldable seat comprising a back rest (3), a head rest (4) disposed thereon if required, and a seat part (2) with a mechanism whereby the seat (30) can be moved at least from a sitting position (S) into a loading position (L) and back, wherein the seat (30) is lockable in the positions (S) and (L), wherein in the loading position (L) the loading surface is the back (18) of the back rest (3), wherein a bottom end (5) of the back rest (3) of the seat (30) is pivotable around an axis (6), wherein a rear end (9) of the seat part (2) is disposed on a pivot (8) on the bottom end (5) of the back rest (3), wherein a front region (10) of the seat part (2) can be moved out of the sitting position (S) into the loading position (L) and back via at least one pivotable lever (21) pivotably mounted on the body (7, 16) of the vehicle or the like (17), wherein the back rest (3) is movably connected to the body (7, 16) via seat rails (31), wherein the seat (30) is movable into a front position (41) so that the space behind the seat (30) is accessible,
**characterised in that** the bottom end (23) of the at least one front pivotable lever (21) is mounted on the body (7) or on a floor (16) of the vehicle (17) so as to be pivotable around a bottom joint (25).

2. A vehicle according to claim 1,
**characterised in that** the seat (30) with the movable back rest (3), when swung into the loading position (L), has a toggle-joint effect which automatically moves the seat (30) into the rearmost position (29) of the seat (30) when the longitudinal adjusting means is unlocked.

## Revendications

1. Véhicule automobile comportant un siège rabattable ayant un dossier (3) avec le cas échéant un appui-tête (4) et une assise (2) ainsi qu'une cinématique qui transforme le siège (30) d'une position S correspondant à la fonction de siège en une position L correspondant à une fonction de surface de chargement et inversement,
le siège (30) se verrouillant dans ces positions (S, L),
dans la position L, pour la fonction de surface de chargement, la face arrière (18) du dossier (3) servant de surface de chargement,
l'extrémité inférieure (5) du dossier (3) du siège (30) est reliée par un axe de rotation (6),
l'extrémité arrière (9) de l'assise (2) est reliée par un axe de rotation (8) à l'extrémité inférieure (5) du dossier (3),
la zone avant (10) de l'assise (2), est réglable par au moins un levier pivotant (21) monté de manière mobile sur la carrosserie (7, 16) du véhicule ou analogue (17), à partir de la position S correspondant à la fonction assise à la position L correspondant à la fonction de surface de chargement et inversement,
le dossier (3) étant relié de manière coulissante à la carrosserie (7, 16) par des rails de siège (31),
le siège (30) pouvant coulisser dans une position avancée (41) de façon à rendre accessible l'espace derrière le siège (30),
véhicule **caractérisé en ce que**
l'extrémité inférieure (23) respective d'un levier avant (21), pivotant, est reliée de manière pivotante à la carrosserie (7) ou au plancher (16) du véhicule (17) par l'intermédiaire d'une articulation inférieure (25).

2. Véhicule automobile selon la revendication 1,
**caractérisé en ce que**
lors du rabattement dans la position correspondant à la fonction de surface de chargement L, le siège (30) travaille par un effet de genouillère avec le dossier (3) coulissant de façon à faire coulisser automatiquement le siège (30) dans sa position (29) la plus à l'arrière lors du déplacement longitudinal déverrouillé.
